# EUROPEAN PATENT SPECIFICATION

(11) **EP 2 611 735 B1**
(45) Date of publication and mention of the grant of the patent: **01.10.2014**
(21) Application number: 11757798.1
(22) Date of filing: 30.08.2011
(51) Int. Cl.: C02F 1/04, B01D 1/00, B01D 53/50, C02F 103/08, C02F 103/18

(54) **SYSTEM AND METHOD FOR THE DESALINATION OF SEA WATER**
SYSTEM UND VERFAHREN ZUR ENTSALZUNG VON MEERWASSER
SYSTÈME ET PROCÉDÉ POUR LE DESSALEMENT D'EAU DE MER

(30) Priority: 30.08.2010 DE 102010035875
(43) Date of publication of application: 10.07.2013
(73) Proprietor: Babcock Borsig Steinmüller GmbH, 46049 Oberhausen (DE)
(72) Inventor: MOUSSAOUI, Mohsen, Safat 13125 (KW); WOLTERS, Clemens, Abu Dhabi (AE)
(74) Representative: Cohausz & Florack
(86) International application number: PCT/EP2011/064885
(87) International publication number: WO 2012/028607

(56) References cited:
- WO-A1-2007/139392
- WO-A2-2010/027938
- DE-A1- 2 943 468
- JP-A- 2008 207 149
- US-A- 4 371 508
- US-A- 5 683 587
- US-A1- 2007 098 035
- US-A1- 2009 001 020
- US-A1- 2009 032 388
- US-A1- 2009 260 519

## Description

The present invention relates to a system for the desalination of sea water comprising a sea water desalination unit and a sea water based flue gas desulphurization unit and to a method for the desalination of sea water by interconnecting a sea water desalination unit with a sea water based flue gas desulphurization unit.

A method for the multistage purification of fresh water and service water is known from DE 31 05 550 A1. DE 29 43 468 C2 discloses the usage of waste water of a desalination plant for the desulfurization of flue gases. DE 198 15 207 C1 describes a method for separating sulphur dioxide from off-gas as well as a plant for the implementation of said method. It is very well known that one of the major problems which is affecting desalination processes is the scale formation which reduces the plant performance. Scale formation can be a problem in multi-stage flash (MSF) desalination processes as well as in multi-effect desalination (MED) processes. Many methods to prevent or to reduce the scaling formation in the desalination plants were studied and some of these methods partially are solving the problem. The most popular method, applied nowadays in most of the thermal desalination units, is known as "threshold treatment" and it is based on anti-scale additives which interfere with the crystallization process. The additives can be dosed in the make-up or in the brine recirculation stream of the desalination unit.

The dosage ratio of the additives is normally referred to the make-up flow and it is ranging between 1.5 to 3 ppm, depending of the top brine temperature and the brine concentration ratio. However, adding additives makes the process more expensive.

It is therefore the object of the present invention to increase the overall performance of the desalination process while reducing the amount of additives.

Regarding a system for the desalination of sea water, the object of the invention is solved by a system having the features specified in the preamble of claim 1 in that brine blow-down outlet of the desalination unit is in fluid communication with sea water inlet of the desulphurization unit; and/or sea water discharge outlet of the desulphurization unit is in fluid communication with make-up water inlet of the desalination unit; and/or sea water discharge outlet of the desalination unit is in fluid communication with sea water inlet of the desulphurization unit.

According to a further teaching of the invention, the brine blow-down outlet of the desalination unit is directly connected with the sea water inlet of the desulphurization unit via a tube, pipe or any other conduit.

According to another preferred embodiment, the sea water discharge outlet of the desulphurization unit is directly connected with the make-up water inlet of the desalination unit via a tube, pipe or any other conduit.

Regarding another advantageous teaching according to this invention, the sea water discharge outlet of the desalination unit is directly connected with the sea water inlet of the desulphurization unit via a tube, pipe or any other conduit.

According to a further teaching of the invention, the system further comprises a power plant. The waste heat of the power plant can be used for supplying the brine heater of the desalination unit with steam.

According to another preferred embodiment, the desalination unit is a multi-stage flash distillation unit, a multiple-effect distillation unit, a vapour compression distillation unit or any combination thereof.

Regarding another advantageous teaching according to this invention, the desulphurisation unit comprises an absorber and an aerator that are combined in a single vessel.

Regarding a method for the desalination of sea water, the object of the invention is solved by a method having the features specified in the preamble of claim 8 comprising the steps of providing fluid communication between brine blow-down outlet of the desalination unit and sea water inlet of the desulphurization unit; and reusing brine that is discharged from the desalination unit in the flue gas desulphurization unit; and/or providing fluid communication between sea water discharge outlet of the desulphurization unit and make-up water inlet of the desalination unit; and reusing sea water that is discharged from the flue gas desulphurization unit in the desalination unit; and/or providing fluid communication between sea water discharge outlet of the desalination unit and sea water inlet of the desulphurization unit; and reusing sea water that is discharged from the desalination unit in the flue gas desulphurization unit.

According to a further teaching of the invention, the method further comprises the step of providing a direct connection between the brine blow-down outlet of the desalination unit and the sea water inlet of the desulphurization unit via a tube, pipe or any other conduit.

According to another preferred embodiment, the method further comprises the step of providing a direct connection between the sea water discharge outlet of the desulphurization unit and the make-up water inlet of the desalination unit via a tube, pipe or any other conduit.

Regarding another advantageous teaching according to this invention, the method further comprises the step of providing a direct connection between the sea water discharge outlet of the desalination unit and the sea water inlet of the desulphurization unit via a tube, pipe or any other conduit.

This invention is based on the idea to link a desalination process to a flue gas desulphurization (FGD) system in order to reduce the alkalinity of sea water supplied to the distiller as a make-up, and consequently to reduce the additives consumption, the sludge formation and to improve the heat transfer coefficient. In this application, the term sea water describes water that contains dissolved salt. This water must not necessarily come from a sea or ocean.

Due to the fact that many desalination units are operated on heavy fuel oil or gas or other fuel with high sulfur content, the flue gas that is emitted has to be desulphurized in order to meet statutory limits. However, the invention uses the desulphurization unit not only for its original purpose, cleaning the flue gas, but intelligently connects the desalination unit with the desulphurization unit.

The main purpose of this invention is, among others, to increase the performance of the existing anti scaling methods, to reduce the additives consumption and the sludge formation on heat transfer surfaces and/or in the demister pads. The invention covers, but is not limited to, all existing MSF desalination units, cross-flow or long tube design, single, double or multi deck type. The application of the invention covers also the existing MED desalination plants, as well as the new plants (MSF and MED type) for which it is possible to find a lot of different additional benefits.

Even if the sulphur content of the flue gas is well below actual environmental statutory regulations, the invention makes the decision about investments easier because of its saving effect on the additive side.

In order to provide a better understanding of the invention, flue gas desulphurization processes and desalination processes will be described individually before a linked process according to the invention will be described.

### A) Flue gas desulphurization process

It is very well known that there are many different technologies available for flue gas desulphurization (FGD). One concept for the desulphurization of flue gas is a sea water based flue gas desulphurization process (SWFGD). Due to the fact that sea water is a natural alkaline media usable to absorb SO₂, a sea water based FGD process is one of the best alternatives for those systems located close to a sea water desalination plant, normally located in a marine environment.

In a SWFGD process, the SO₂ is absorbed in the water and, when oxygen is added, reacts to form sulfate ions SO4⁻⁻ and free H⁺ as shown in the reaction [1].

**SO₂+H₂O+½·O₂→SO₄⁻⁻+2·H⁺** [1]

Then the surplus of H⁺ is offset by the carbonates in sea water pushing the carbonate equilibrium to release CO₂ gas, see reaction [2].

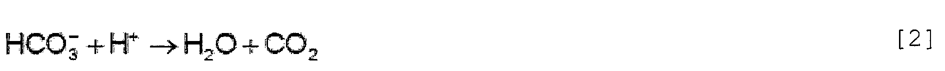

In case that the SO₂ absorption arises in an environment containing low O₂, instead of the reaction [1], the absorption will arise trough the formation of sulfite ions SO₃⁻⁻ as per following reaction [3].

**SO₂+H₂O→SO₃⁻⁻+2·H⁺** [3]

The formation of sulfate ions SO₄⁻⁻ may then arise in a separate vessel where a forced aeration is provided:

**SO₃⁻⁻+½· O₂ → SO₄⁻⁻** [4]

### B) Desalination process

Many different evaporative desalination processes are known in the art, like, among others, MSF, MED, vapor compression and MED combined with vapor compression. All of said processes may be applied to the invention.

Evaporative desalination processes are based on the fact that when the sea water reaches a temperature corresponding to its boiling point and if additional heat is supplied, it will start to produce pure steam; the condensate of this steam is collected as desalination product. In industrial plants, the evaporative desalination processes receive energy from an external source in form of steam and the condensate of this steam is returned to the external process. The heat released by the condensation of the external steam is utilized to obtain evaporation of sea water and to produce the distillate. The evaporative desalination plants may contain one or more sea water evaporation chambers at different evaporation temperatures and pressures in order to minimize the energy consumption of the process. The evaporation desalination plants are characterized by the fact that a blow-down of concentrated sea water (brine) and a fresh sea water make-up stream are provided in order to maintain the same quantity of water inside the plant and to control the brine concentration to avoid the scaling formation and the salt deposits.

### C) Linked desalination / flue gas desulphurization process

According to a first aspect of the invention, the sea water discharge outlet of the desalination unit is in fluid communication with the sea water inlet of the desulphurization unit. Sea water discharged from a desalination process can be economically reused for a FGD process. The major advantages of the sea water reuse is a civil-cost reduction for sea water intake and mechanical equipment (pumps, motors, pipes and valves), saving in energy consumption for sea water pumping station, and lower installation and maintenance cost.

According to a second aspect of the invention, the brine blow-down outlet of the desalination unit is in fluid communication with the sea water inlet of the desulphurization unit. This method results in very interesting advantages on SO₂ absorption efficiency especially when the SO₂ concentration on flue gas is low and when the FGD unit requires lower water flow for the absorption process. The major advantages of this linking method are the increasing efficiency of the FGD system due to higher alkalinity of the brine blow-down stream and saving in installation and operation costs.

According to a third aspect of the invention, the sea water discharge outlet of the desulphurization unit is in fluid communication with the make-up water inlet of the desalination unit. This linking method is a strongly relevant linking method due to the high benefits which can be found in the evaporative desalination processes. In fact, the alkalinity of sea water after passing through the FGD system is much lower than the natural sea water alkalinity and consequently the scaling problems in the desalination plant are minimized. The major advantages of this linking method are lower additives consumption for desalination plants, higher desalination efficiency due to the reduce fouling on heat transfer surfaces, reduction of acid cleaning shut-down to remove the scaling and lower operating and maintenance costs.

In the desalination plant, when the sea water is heated over 75°C, the dissolved calcium bicarbonate breaks down into calcium carbonates and carbon dioxide as per following reaction [5].

**Ca(HCO₃)₂ → CaCO₃ + H₂O + CO₂** [5]

The calcium carbonate produces scaling on heat transfer tubes due to the fact that it is a not soluble salt. Increasing again the sea water temperature, also the dissolved magnesium carbonates break down into magnesium hydroxide and carbon dioxide as per following reaction [6].

**MgCO₃ + H₂O → Mg(OH)₂ + CO₂** [6]

Also the magnesium hydroxide is not soluble and produces scaling on heat transfer surfaces. Normally the deposit of CaCO₃ and Mg(OH)₂ are avoided by an injection of a suitable anti-scaling product which interferes with the crystallization process and which permits to operate the MSF desalination plant up to 90°C (Low Temperature Additives) or up to 112-115°C (High Temperature Additives), depending from the decomposition temperature of the above mentioned additives. The treatment with the LTA or HTA (Low or High Temperature Additives) is also known as a threshold treatment. The optimum dosage of additives is ranging between 1.5 up to 3 ppm referred to make-up flow and depends of used additives, brine concentration and pH, sea water alkalinity and top brine temperature. Concerning the new idea to link a desalination unit with a FGD unit, the absorption of SO₂ produces sulfuric acid H₂SO₄.

Due to the fact that the sulfuric acid is stronger than the carbonic acid, it will react with the carbonates and bicarbonates dissolved in sea water as per following reactions forming carbonic acid (H₂CO₃).

**Ca(HCO₃)₂ + H₂SO₄ → CaSO₄ + 2 · H₂CO₃** [7]

**MgCO₃ + H₂SO₄ → MgSO₄ + H₂CO₃** [8]

The carbonic acid can be easily removed from the process due to the equilibrium, shown in the following reaction [9], with the dissolved CO₂ in the water.

**H₂CO₃** ⇔ **H₂O + CO₂** [9]

When the dissolved CO₂ is stripped out from the system, the reaction [9] will proceed on the right direction. Consequently, in case that the sulfuric acid due to absorption in the FGD system is not exceeding the stoichiometric value required from reactions [7] and [8], after a complete de-carbonization, the acidity of make-up water will be totally removed and the pH will be little more than 7.5.

Assuming that the SO₂ absorption in the FGD can reduce the total alkalinity in the sea-water from 115-120 mg/l to 20-30 mg/l, the consumption of anti-scaling additives can be drastically reduced as well as the acid cleaning frequency.

It needs to be noted here, that the linking of a desalination unit with a FGD unit does not involve any additional corrosion problems due to the fact that the SO₂ absorption should be limited to 75-80% of the stoichiometric value required from reactions [7] and [8], leaving a residual alkalinity in the make-up sea water and in the re-circulating brine.

The absorption process can be summarized in the following steps:
- Step 1: SO₂ absorption and formation of sulfuric acid H₂SO₄.
- Step 2: Reaction between the sulfuric acid H₂SO₄ and the bicarbonates Ca(HCO₃)₂ which involves the formation of carbonic acid H₂CO₃ and a reduction of sea water alkalinity.
- Step 3: Neutralization of the sea water acidity due to the carbonic acid H₂CO₃ by stripping of CO₂ gas.

The present invention will be described in greater detail in the following on the basis of a drawing. The drawing merely illustrates preferred exemplary embodiments, on the basis of which the function of the system according to the present invention and the respective method will be described in detail. In the drawing
- Fig. 1: shows a multi-stage flash (MSF) desalination unit known from the art;
- Fig. 2: shows a flue gas desulphurization unit with an aerator in a separate vessel known from the art;
- Fig. 3: shows a flue gas desulphurization unit with a combined absorber/aerator vessel known from the art;
- Fig. 4: shows schematically a first type of a desalination unit;
- Fig. 5: shows schematically a second type of a desalination unit;
- Fig. 6: shows schematically a third type of a desalination unit;
- Fig. 7: shows the second type of a desalination unit combined with a desulphurization unit, wherein the sea water discharge outlet of the desalination unit is in fluid communication with the sea water inlet of the desulphurization unit according to the first aspect of this invention;
- Fig. 8: shows the third type of a desalination unit combined with a desulphurization unit, wherein the sea water discharge outlet of the desalination unit is in fluid communication with the sea water inlet of the desulphurization unit according to the first aspect of this invention;
- Fig. 9: shows the first type of a desalination unit combined with a desulphurization unit, wherein the brine blow-down outlet of the desalination unit is in fluid communication with the sea water inlet of the desulphurization unit according to the second aspect of this invention;
- Fig. 10: shows the second type of a desalination unit combined with a desulphurization unit, wherein the brine blow-down outlet of the desalination unit is in fluid communication with the sea water inlet of the desulphurization unit according to the second aspect of this invention;
- Fig. 11: shows the third type of a desalination unit combined with a desulphurization unit, wherein the brine blow-down outlet of the desalination unit is in fluid communication with the sea water inlet of the desulphurization unit according to the second aspect of this invention;
- Fig. 12: shows the first type of a desalination unit combined with a desulphurization unit, wherein the sea water discharge outlet of the desulphurization unit is in fluid communication with the make-up water inlet of the desalination unit according to the third aspect of this invention;
- Fig. 13: shows the second or third type of a desalination unit combined with a desulphurization unit, wherein the sea water discharge outlet of the desulphurization unit is in fluid communication with the make-up water inlet of the desalination unit according to the third aspect of this invention;
- Fig. 14: shows the second or third type of a desalination unit combined with a desulphurization unit, wherein the sea water discharge outlet of the desulphurization unit is in fluid communication with the make-up water inlet of the desalination unit according to the third aspect of this invention, wherein the sea water discharge outlet of the desalination unit is in fluid communication with the sea water inlet of the desulphurization unit according to the first aspect of this invention;
- Fig. 15: shows the second or third type of a desalination unit combined with a desulphurization unit, wherein the sea water discharge outlet of the desulphurization unit is in fluid communication with the make-up water inlet of the desalination unit according to the third aspect of this invention, wherein the sea water discharge outlet and the brine blow-down outlet of the desalination unit are in fluid communication with the sea water inlet of the desulphurization unit according to the first and second aspect of this invention;

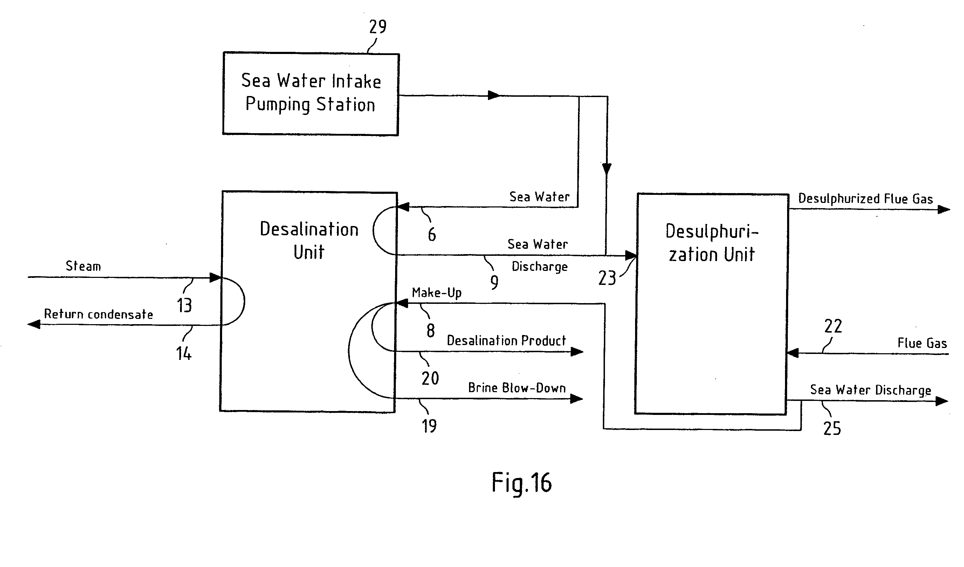

- Fig. 16: shows the second or third type of a desalination unit combined with a desulphurization unit, wherein the sea water discharge outlet of the desulphurization unit is in fluid communication with the make-up water inlet of the desalination unit according to the third aspect of this invention, wherein the sea water discharge outlet of the desalination unit is in fluid communication with the sea water inlet of the desulphurization unit according to the first aspect of this invention, wherein additional sea water necessary for the desulphurization system is taken from a sea water intake pumping station;

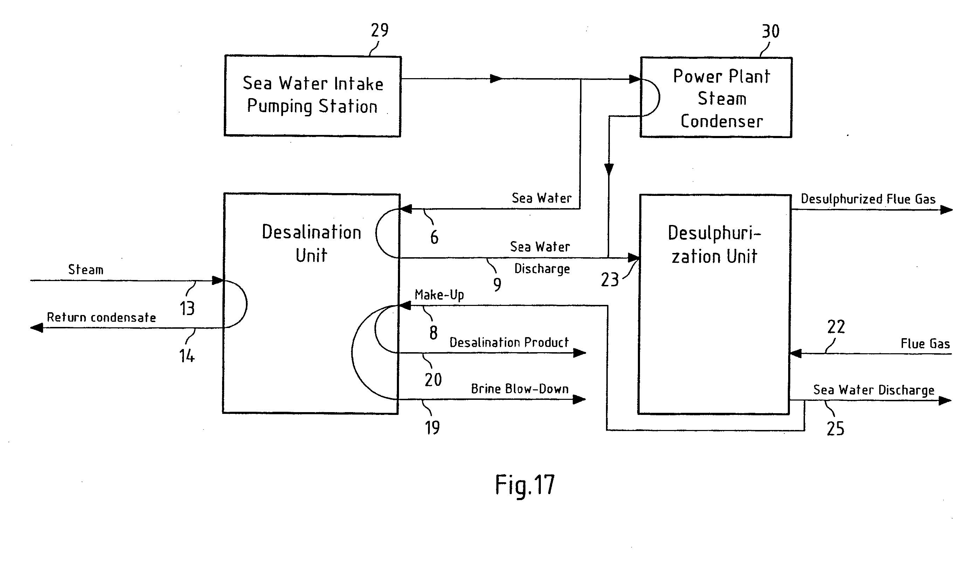

- Fig. 17: shows the second or third type of a desalination unit combined with a desulphurization unit, wherein the sea water discharge outlet of the desulphurization unit is in fluid communication with the make-up water inlet of the desalination unit according to the third aspect of this invention, wherein the sea water discharge outlet of the desalination unit is in fluid communication with the sea water inlet of the desulphurization unit according to the first aspect of this invention, wherein additional sea water necessary for the desulphurization system is taken from a sea water outlet of a steam condenser of a power plant; and

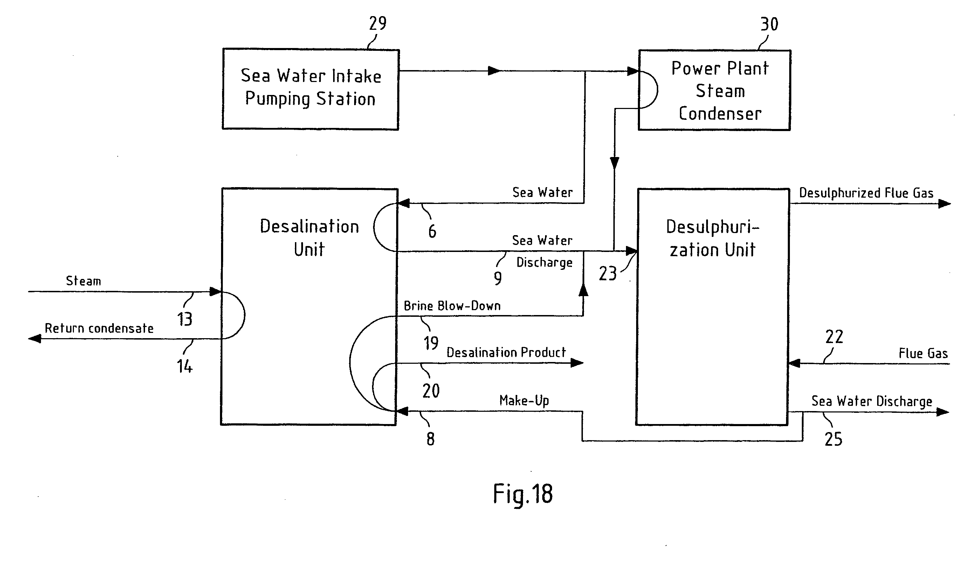

- Fig. 18: shows the second or third type of a desalination unit combined with a desulphurization unit, wherein the sea water discharge outlet of the desulphurization unit is in fluid communication with the make-up water inlet of the desalination unit according to the third aspect of this invention, wherein the sea water discharge outlet and the brine blow-down outlet of the desalination unit are in fluid communication with the sea water inlet of the desulphurization unit according to the first and second aspect of this invention, wherein additional sea water necessary for the desulphurization system is taken from a sea water outlet of a steam condenser of a power plant.

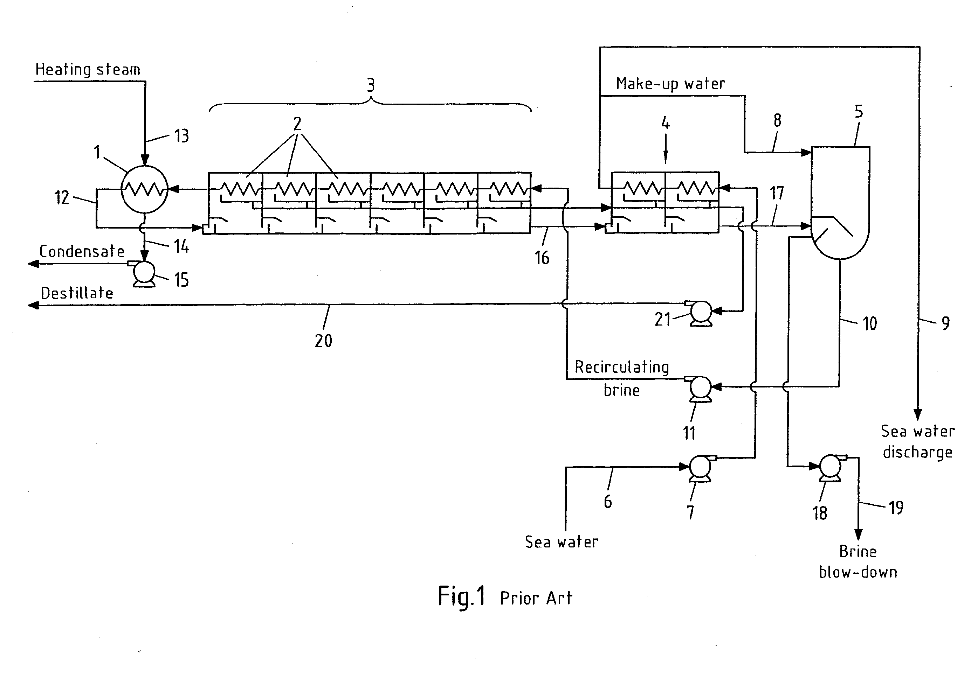

In Fig. 1, the schematic diagram of a MSF desalination unit according to the state of the art is shown. The unit comprises a brine heater 1, a desalination zone of multi-stage flash (MSF) distillation stages 2 being referred to as a heat recovery section 3, a heat rejection section 4 and, as an option, a deaerator 5. Sea water is pumped through a sea water inlet 6 by a sea water pump 7 into the heat rejection section 4, and further fed as 'make-up' via a make-up water inlet 8 into the deaerator 5. Excess sea water is discharged via a sea water discharge outlet 9.

The stream of brine and fresh sea-water is racked via a brine recirculation suction line 10 by a brine recirculating pump 11 into the heat recovery section 3, cooling the different MSF distillation heat recovery stages 2. After having left the last unit 2 (on the left in Fig. 1), the brine is heated in the brine heater 1 and fed via a brine recirculation line 12 back into the (most left) unit 2 of heat recovery section 3, and therefrom, in a reverse direction flow, into all other distillation stages 2.

The brine heater 1 is heated by means of steam coming via a steam supply line 13 from a (non-illustrated) heat source.

The heat source may be a power plant. The condensate in the brine heater 1 is drawn off via a condensate extraction line 14 by a condensate extraction pump 15. After having left the last unit 2 (on the right in Fig. 1), the flashing brine flows via a brine connection 16 into the heat rejection section 4, where further condensate is produced. A brine connection 17 brings the brine back into the deaerator 5, from where the brine recirculating process continues. Excess brine is stripped out of the deaerator 5 by a brine blow down pump 18 and blown-off via a brine blow-down outlet 19. In the heat recovery section 3 and following in the heat rejection section 4, the steam coming from the brine is being condensed at the cold pipes and the collected distillate is being drawn off via a distillate delivery line 20 by a distillate pump 21.

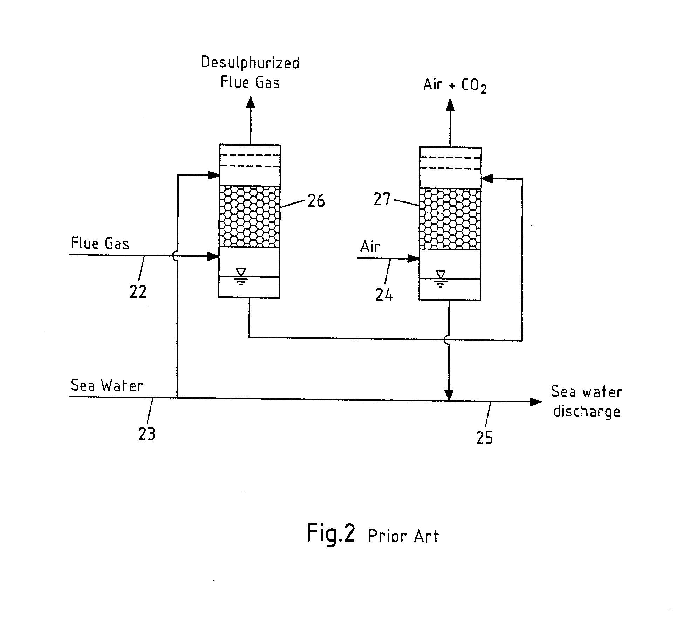

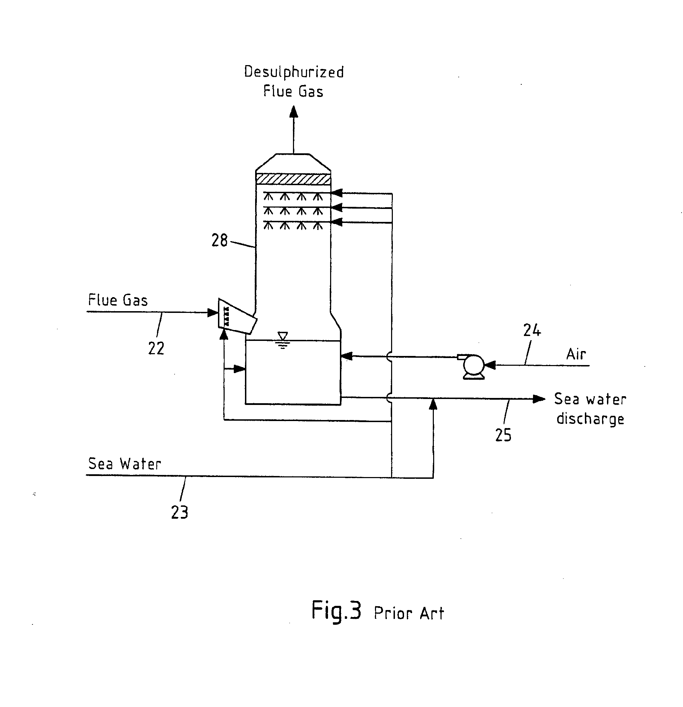

A schematic flow diagram of a sea water based flue gas desulphurization unit is illustrated in Figs. 2 and 3. Both sea water based flue gas desulphurization units show a flue gas inlet 22, a sea water inlet 23, an air inlet 24 and a sea water discharge outlet 25. The desulphurization unit of Fig. 2 comprises an SO₂-absorber 26 and an aerator 27 arranged in separate vessels, whereas Fig. 3 illustrates a unit in which both absorption and aeration are carried out in a combined vessel 28.

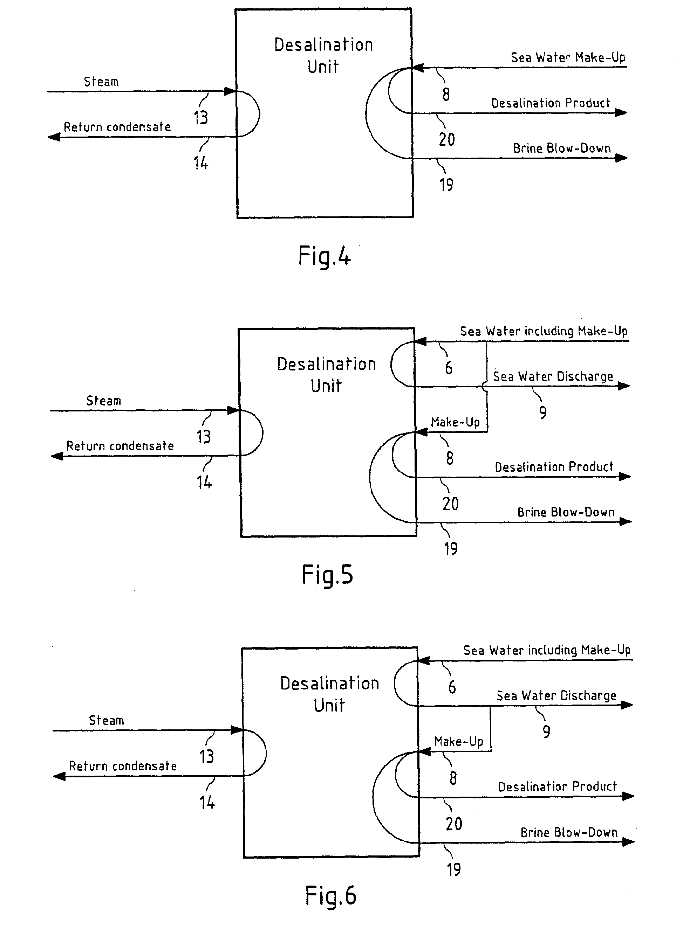

Fig. 4 provides a simplified schematic illustration of a desalination process previously called "first type" of a desalination unit which can be applied to a MSF plant once through type, to a vapor compression plant, or to a MED plant. The same reference numerals like in Fig. 1 are used in Fig. 4 for similar features. Steam from an external source enters the desalination unit via the steam supply line 13. Return condensate leaves the desalination unit to the external source via condensate extraction line 14. Sea water make-up is pumped into the desalination unit through a make-up water inlet 8. The desalination product, distillate water, is separated via distillate delivery line 20. Excess brine is blown out via brine blow-down outlet 19.

Figs. 5 and 6 also show a schematic illustration of a desalination process that is similar to the process of Fig. 4. In contrast to the process shown in Fig. 4, an additional sea water flow is provided for cooling purposes. As shown in Figs. 5 and 6, the sea water make up can be taken before ("second type" of a desalination unit) or after ("third type" of a desalination unit) the cooling process. In case the sea water is taken before the cooling process, the sea water inlet 6 is connected with the make-up water inlet 8, see Fig. 5. Additionally or alternatively, the sea water discharge outlet 9 is connected with the make-up water inlet 8 in case sea water is taken after the cooling process, see Fig. 6.

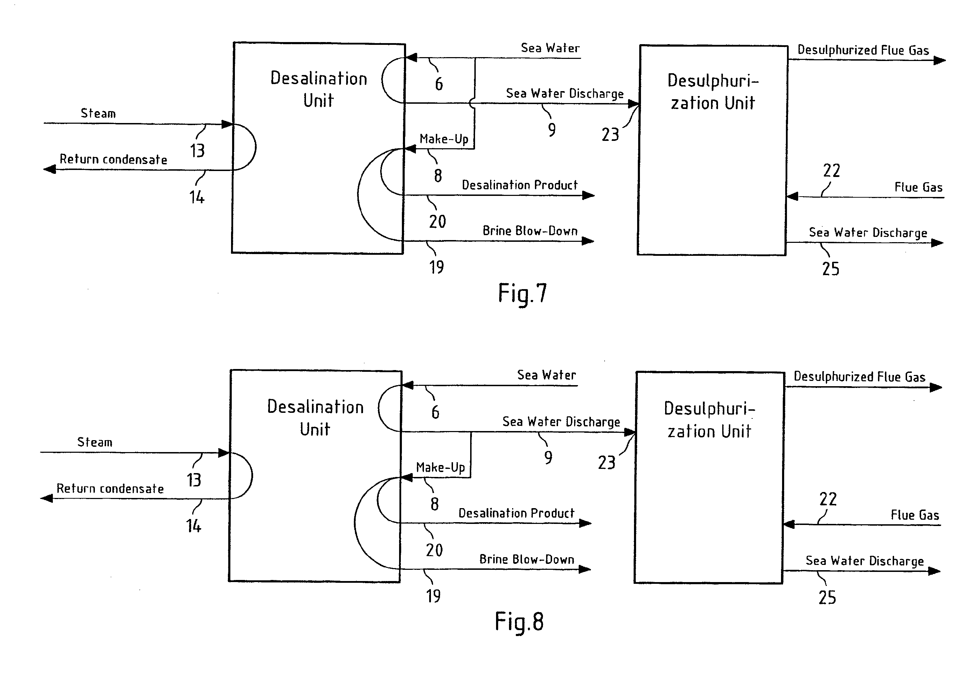

As shown in Figs. 7 and 8, the sea water discharge outlet 9 of the desalination unit is in fluid communication with the sea water inlet 23 of the desulphurization unit. This can be realized indirectly or by a direct connection via a tube, pipe or any other conduit. The desalination unit can be, for example, a unit as illustrated in greater detail in Fig. 1 and the desulphurization unit can be, for example, a unit as illustrated in greater detail in Figs. 2 or 3. The sea water can be discharged from the desalination plant when sea water make up is taken before cooling from sea water inlet 6, see Fig. 7, or after cooling from sea water discharge outlet 9, see Fig. 8. Cooling of the sea water takes place in the heat rejection section 4, see Fig. 1.

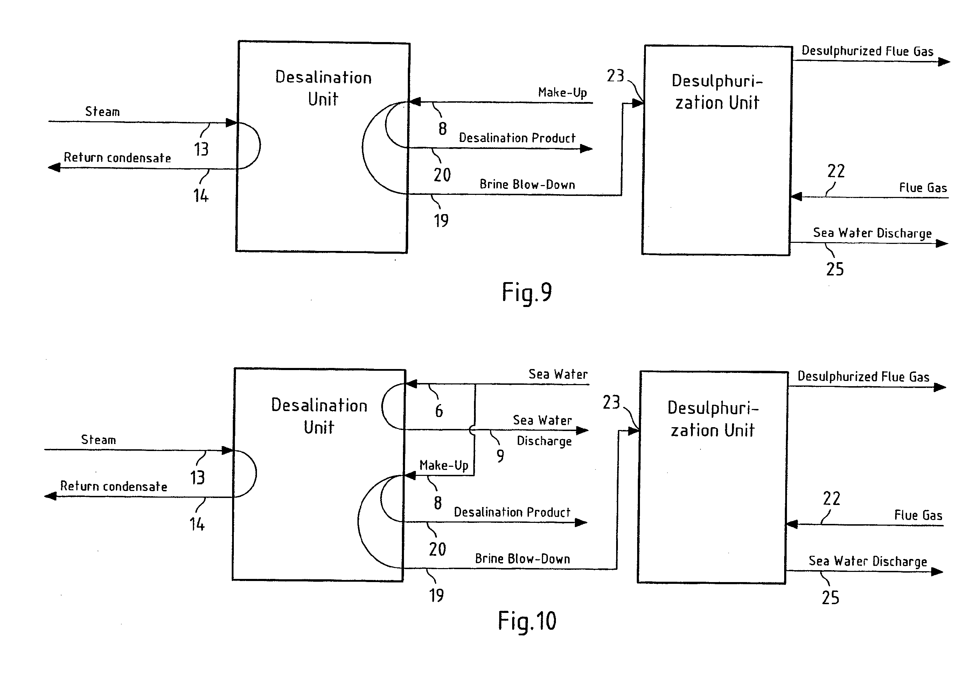

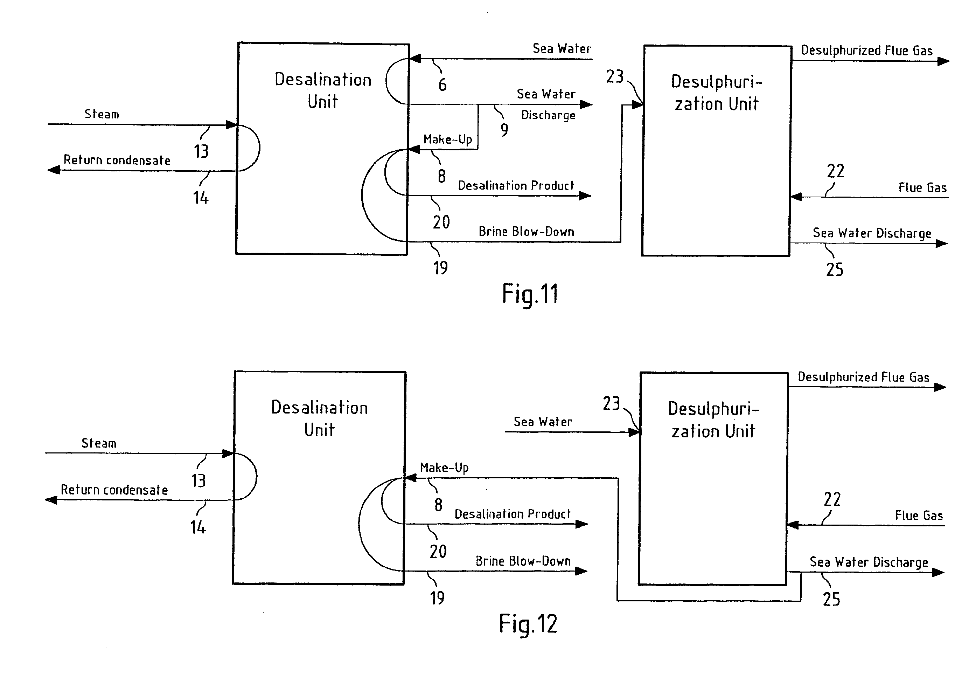

Figs. 9, 10 and 11 illustrate that the brine blow-down outlet 19 of the desalination unit is in fluid communication with the sea water inlet 23 of the desulphurization unit. This can be done indirectly or by a direct connection via a tube, pipe or any other conduit. Again, the desalination unit can be, for example, a unit as illustrated in greater detail in Fig. 1 and the desulphurization unit can be, for example, a unit as illustrated in greater detail in Figs. 2 or 3. In contrast to the process shown in Fig. 9, an additional sea water flow is provided for cooling purposes in Figs. 10 and 11. As shown there, the sea water make up can be taken before (Fig. 10) or after the cooling process (Fig. 11) either from the sea water inlet 6 or from the sea water discharge outlet 9. Since the brine blow-down outlet 19 of the desalination unit is connected with the sea water inlet 23 of the desulphurization unit, the sea water discharge outlet 25 can also be called brine blow-down discharge in these embodiments, see Figs. 9, 10 and 11.

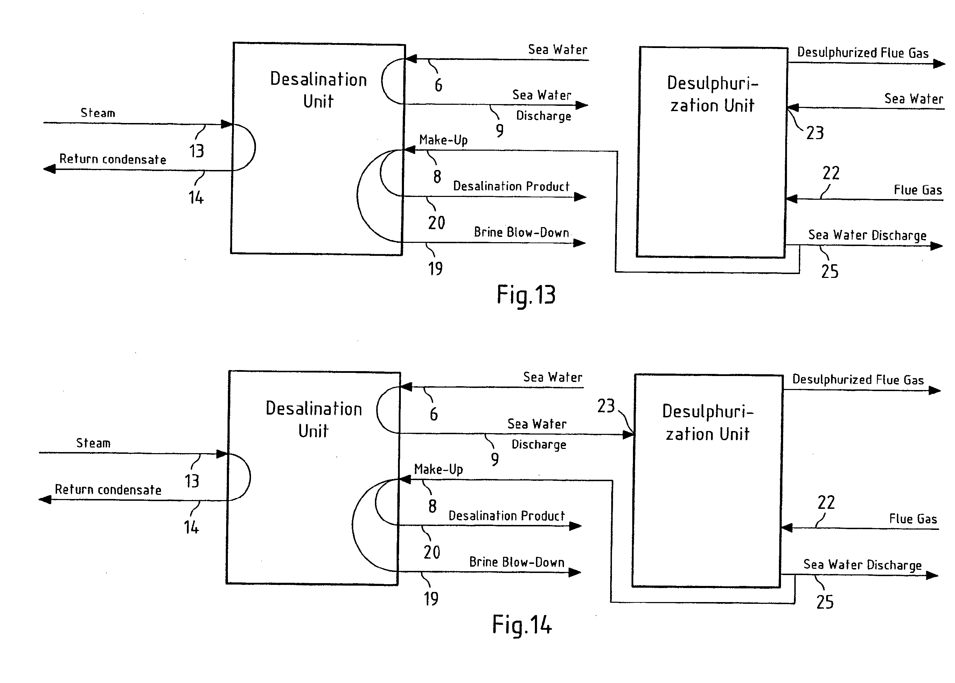

As shown in Figs. 12, 13 and 14, the sea water discharge outlet 25 of the desulphurization unit is in fluid communication with the make-up water inlet 8 of the desalination unit. Again, this can be realized indirectly or by a direct connection via a tube, pipe or any other conduit. The desalination unit can be, for example, a unit as illustrated in greater detail in Fig. 1 and the desulphurization unit can be, for example, a unit as illustrated in greater detail in Figs. 2 or 3. The sea water feed can be managed differently. According to the embodiment shown in Fig. 12, fresh sea water is merely pumped into the sea water inlet 23 of the desulphurization unit. The desalination unit is fed via the connection with the desulphurization unit described above. According to the embodiment illustrated in Fig. 13, both units have their own sea water supply, sea water inlet 6 and sea water inlet 23. According to the embodiment shown in Fig. 14, sea water is merely pumped into the sea water inlet 6 of the desalination unit. The desulphurization unit is fed via a connection of the sea water discharge outlet 9 with the sea water inlet 23.

The three concepts of connecting the sea water discharge outlet 9 of the desalination unit with the sea water inlet 23 of the desulphurization unit (Figs. 7 and 8), connecting the brine blow-down outlet 19 of the desalination unit with the sea water inlet 23 of the desulphurization unit (Figs. 9, 10 and 11) and connecting the sea water discharge outlet 25 of the desulphurization unit with the make-up water inlet 8 of the desalination unit (Figs. 12, 13 and 14) can be combined. This includes any combination of the embodiments described in greater detail in Figs. 7 to 14.

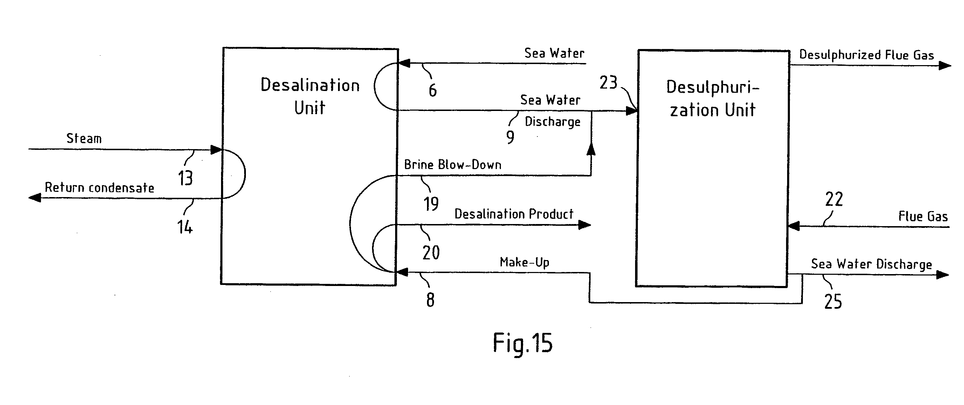

Figs. 15, 16, 17 and 18 illustrate some other examples of how to combine a desalination unit with a desulphurization unit and examples of how to link both units with a sea water intake pumping station 29 and/or a power plant steam condenser 30.

### List of reference numerals:

- 1:: brine heater
- 2:: distillation stage
- 3:: heat recovery section
- 4:: heat rejection section
- 5:: deaerator
- 6:: sea water inlet
- 7:: sea water pump
- 8:: make-up water inlet
- 9:: sea water discharge outlet
- 10:: brine recirculation suction line
- 11:: brine recirculating pump
- 12:: brine recirculation line
- 13:: steam supply line
- 14:: condensate extraction line
- 15:: condensate extraction pump
- 16:: brine connection
- 17:: brine connection
- 18:: brine blow down pump
- 19:: brine blow-down outlet
- 20:: distillate delivery line
- 21:: distillate pump
- 22:: flue gas inlet
- 23:: sea water inlet
- 24:: air inlet
- 25:: sea water discharge outlet
- 26:: SO₂-absorber
- 27:: aerator
- 28:: combined vessel
- 29:: sea water intake pumping station
- 30:: power plant steam condenser

## Claims

1. System for the desalination of sea water comprising a sea water desalination unit and a sea water based flue gas desulphurization unit, wherein
sea water discharge outlet (25) of the desulphurization unit is in fluid communication with make-up water inlet (8) of the desalination unit,
**characterized in that**
the sea water discharge outlet (25) of the desulphurization unit is directly connected with the make-up water inlet (8) of the desalination unit via a tube, pipe or any other conduit.

2. System according to claim 1,
**characterized in that**
brine blow-down outlet (19) of the desalination unit is in fluid communication with sea water inlet (23) of the desulphurization unit.

3. System according to claim 1 or 2,
**characterized in that**
sea water discharge outlet (9) of the desalination unit is in fluid communication with sea water inlet (23) of the desulphurization unit.

4. System according to claim 2,
**characterized in that**
the brine blow-down outlet (19) of the desalination unit is directly connected with the sea water inlet (23) of the desulphurization unit via a tube, pipe or any other conduit.

5. System according to claim 3,
**characterized in that**
the sea water discharge outlet (9) of the desalination unit is directly connected with the sea water inlet (23) of the desulphurization unit via a tube, pipe or any other conduit.

6. System according to any one of claims 1 to 5,
**characterized in that**
the system further comprises a power plant.

7. System according to any one of claims 1 to 6,
**characterized in that**
the desalination unit is a multi-stage flash distillation unit, a multiple-effect distillation unit, a vapour compression distillation unit or any combination thereof.

8. System according to any one of claims 1 to 7,
**characterized in that**
the desulphurisation unit comprises an absorber and an aerator that are combined in a single vessel (28).

9. Method for the desalination of sea water by interconnecting a sea water desalination unit with a sea water based flue gas desulphurization unit,
comprising the steps of:
- providing fluid communication between sea water discharge outlet (25) of the desulphurization unit and make-up water inlet (8) of the desalination unit by providing a direct connection between the sea water discharge outlet (25) of the desulphurization unit and the make-up water inlet (8) of the desalination unit via a tube, pipe or any other conduit; and
- reusing sea water that is discharged from the flue gas desulphurization unit in the desalination unit.

10. Method according to claim 9, further comprising the steps of:
- providing fluid communication between brine blow-down outlet (19) of the desalination unit and sea water inlet (23) of the desulphurization unit; and
- reusing brine that is discharged from the desalination unit in the flue gas desulphurization unit.

11. Method according to claim 9 or 10, further comprising the steps of:
- providing fluid communication between sea water discharge outlet (9) of the desalination unit and sea water inlet (23) of the desulphurization unit; and
- reusing sea water that is discharged from the desalination unit in the flue gas desulphurization unit.

12. Method according to claim 10, further comprising the step of providing a direct connection between the brine blow-down outlet (19) of the desalination unit and the sea water inlet (23) of the desulphurization unit via a tube, pipe or any other conduit.

13. Method according to claim 11, further comprising the step of providing a direct connection between the sea water discharge outlet (9) of the desalination unit and the sea water inlet (23) of the desulphurization unit via a tube, pipe or any other conduit.

## Patentansprüche

1. System zur Entsalzung von Meerwasser, umfassend eine Meerwasserentsalzungseinheit und eine meerwasserbasierte Rauchgas-Entschwefelungseinheit, wobei
ein Meerwasserablass (25) der Entschwefelungseinheit in Fluidverbindung mit einem Zusatzwassereinlass (8) der Entsalzungseinheit steht,
**dadurch gekennzeichnet, dass**
der Meerwasserablass (25) der Entschwefelungseinheit über einen Schlauch, ein Rohr oder jegliche andere Leitung direkt mit dem Zusatzwassereinlass (8) der Entsalzungseinheit verbunden ist.

2. System nach Anspruch 1,
**dadurch gekennzeichnet, dass**
ein Soleabschlammauslass (19) der Entsalzungseinheit in Fluidverbindung mit einem Meerwassereinlass (23) der Entschwefelungseinheit steht.

3. System nach einem der Ansprüche 1 oder 2,
**dadurch gekennzeichnet, dass**
ein Meerwasserablass (9) der Entsalzungseinheit in Fluidverbindung mit dem Meerwassereinlass (23) der Entschwefelungseinheit steht.

4. System nach Anspruch 2,
**dadurch gekennzeichnet, dass**
der Soleabschlammauslass (19) der Entsalzungseinheit über einen Schlauch, ein Rohr oder jegliche andere Leitung direkt mit dem Meerwassereinlass (23) der Entschwefelungseinheit verbunden ist.

5. System nach Anspruch 3,
**dadurch gekennzeichnet, dass**
der Meerwasserablass (9) der Entsalzungseinheit über einen Schlauch, ein Rohr oder jegliche andere Leitung direkt mit dem Meerwassereinlass (23) der Entschwefelungseinheit verbunden ist.

6. System nach einem der Ansprüche 1 bis 5,
**dadurch gekennzeichnet, dass**
das System ferner ein Kraftwerkmodul umfasst.

7. System nach einem der Ansprüche 1 bis 6,
**dadurch gekennzeichnet, dass**
die Entsalzungseinheit eine mehrstufige Entspannungsverdampfungseinheit, eine Multieffekt-Destillationseinheit, eine Dampfkompressionsdestillationseinheit oder jegliche Kombination davon ist.

8. System nach einem der Ansprüche 1 bis 7,
**dadurch gekennzeichnet, dass**
die Entschwefelungseinheit einen Absorber und einen Belüfter umfasst, die in einem einzigen Gefäß (28) kombiniert sind.

9. Verfahren zum Entsalzen von Meerwasser durch Verbinden einer Meerwasserentsalzungseinheit mit einer meerwasserbasierten Rauchgas-Entschwefelungseinheit, umfassend die folgenden Schritte:
- Vorsehen einer Fluidverbindung zwischen dem Meerwasserablass (25) der Entschwefelungseinheit und einem Zusatzwassereinlass (8) der Entsalzungseinheit durch Vorsehen einer direkten Verbindung zwischen dem Meerwasserablass (25) der Entschwefelungseinheit und dem Zusatzwassereinlass (8) der Entsalzungseinheit über einen Schlauch, ein Rohr oder jegliche andere Leitung; und
- Wiederverwenden von Meerwasser, das aus der Rauchgas-Entschwefelungseinheit in die Entsalzungseinheit abgelassen wird.

10. Verfahren nach Anspruch 9, ferner die folgenden Schritte umfassend:
- Vorsehen einer Fluidverbindung zwischen dem Soleabschlammauslass (19) der Entsalzungseinheit und dem Meerwassereinlass (23) der Entschwefelungseinheit; und
- Wiederverwenden von Sole, die aus der Entsalzungseinheit in die Rauchgas-Entschwefelungseinheit abgelassen wird.

11. Verfahren nach Anspruch 9 oder 10, ferner die folgenden Schritte umfassend:
- Vorsehen einer Fluidverbindung zwischen dem Meerwasserablass (9) der Entsalzungseinheit und dem Meerwassereinlass (23) der Entschwefelungseinheit; und
- Wiederverwenden von Meerwasser, das aus der Entsalzungseinheit in die Rauchgas-Entschwefelungseinheit abgelassen wird.

12. Verfahren nach Anspruch 10, ferner umfassend den Schritt des Vorsehens einer direkten Verbindung zwischen dem Soleabschlammauslass (19) der Entsalzungseinheit und dem Meerwassereinlass (23) der Entschwefelungseinheit über einen Schlauch, ein Rohr oder jegliche andere Leitung.

13. Verfahren nach Anspruch 11, ferner umfassend den Schritt des Vorsehens einer direkten Verbindung zwischen dem Meerwasserablass (9) der Entsalzungseinheit und dem Meerwassereinlass (23) der Entschwefelungseinheit über einen Schlauch, ein Rohr oder jegliche andere Leitung.

## Revendications

1. Système de désalinisation de l'eau de mer, comprenant une unité de désalinisation de l'eau de mer et une unité de désulfuration des effluents gazeux à base d'eau de mer, où la sortie de décharge de l'eau de mer (25) de l'unité de désulfuration est en communication fluide avec l'entrée d'eau d'appoint (8) de l'unité de désalinisation,
**caractérisé en ce que** la sortie de décharge de l'eau de mer (25) de l'unité de désulfuration est connectée directement avec l'entrée d'eau d'appoint (8) de l'unité de désalinisation via un tube, un tuyau ou une autre conduite.

2. Système selon la revendication 1, **caractérisé en ce que** la sortie d'extraction de saumure (19) de l'unité de désalinisation est en communication fluide avec l'entrée d'eau de mer (23) de l'unité de désulfuration.

3. Système selon la revendication 1 ou 2, **caractérisé en ce que** la sortie d'évacuation de l'eau de mer (9) de l'unité de désalinisation est en communication fluide avec l'entrée d'eau de mer (23) de l'unité de désulfuration.

4. Système selon la revendication 2, **caractérisé en ce que** la sortie d'extraction de saumure (19) de l'unité de désalinisation est connectée directement à l'entrée d'eau de mer (23) de l'unité de désulfuration via un tube, un tuyau ou une autre conduite.

5. Système selon la revendication 3, **caractérisé en ce que** la sortie d'évacuation de l'eau de mer (9) de l'unité de désalinisation est connectée directement à l'entrée d'eau de mer (23) de l'unité de désulfuration via un tube, un tuyau ou une autre conduite.

6. Système selon l'une quelconque des revendications 1 à 5, **caractérisé en ce que** le système comprend en outre, une centrale électrique.

7. Système selon l'une quelconque des revendications 1 à 6, **caractérisé en ce que** l'unité de désalinisation est une unité de distillation à détentes étagées, une unité de distillation à multiples effets, une unité de distillation à compression de vapeur ou toute combinaison de ceux-ci.

8. Système selon l'une quelconque des revendications 1 à 7, **caractérisé en ce que** l'unité de désulfuration comprend un absorbeur et un aérateur, qui sont combinés dans un seul récipient (28).

9. Procédé de désalinisation d'eau de mer par interconnexion d'une unité de désalinisation d'eau de mer avec une unité de désulfuration des effluents gazeux à base d'eau de mer, comprenant les étapes de :
- préparation d'une communication fluide entre la sortie de décharge de l'eau de mer (25) de l'unité de désulfuration et l'entrée d'eau d'appoint (8) de l'unité de désalinisation à l'aide d'une connexion directe entre la sortie de décharge de l'eau de mer (25) de l'unité de désulfuration et l'entrée d'eau d'appoint (8) de l'unité de désalinisation via un tube, un tuyau ou une autre conduite, et
- réutilisation de l'eau de mer qui est déchargée de l'unité de désulfuration des gaz effluents dans l'unité de désalinisation.

10. Procédé selon la revendication 9, comprenant en outre les étapes de :
- préparation d'une communication fluide entre la sortie d'extraction de saumure (19) de l'unité de désalinisation et l'entrée d'eau de mer (23) de l'unité de désulfuration, et
- réutilisation de la saumure qui est déchargée de l'unité de désalinisation dans l'unité de désulfuration des gaz effluents.

11. Procédé selon la revendication 9 ou 10, comprenant en outre, les étapes de :
- préparation d'une communication fluide entre la sortie d'évacuation de l'eau de mer (9) de l'unité de désalinisation et l'entrée d'eau de mer (23) de l'unité de désulfuration, et
- réutilisation de l'eau de mer qui est déchargée de l'unité de désalinisation dans l'unité de désulfuration des gaz effluents.

12. Procédé selon la revendication 10, comprenant en outre, l'étape de préparation d'une connexion directe entre la sortie d'extraction de saumure (19) de l'unité de désalinisation et l'entrée d'eau de mer (23) de l'unité de désulfuration via un tube, un tuyau ou une autre conduite.

13. Procédé selon la revendication 11, comprenant en outre, l'étapes de préparation d'une connexion directe entre la sortie d'évacuation de l'eau de mer (9) de l'unité de désalinisation et l'entrée d'eau de mer (23) de l'unité de désulfuration via un tube, un tuyau ou une autre conduite.
